# EUROPÄISCHE PATENTSCHRIFT

(11) **EP 1 952 092 B1**
(45) Veröffentlichungstag und Bekanntmachung des Hinweises auf die Patenterteilung: **22.04.2009**
(21) Anmeldenummer: 06818732.7
(22) Anmeldetag: 22.11.2006
(51) Int. Cl.: G01B 11/22

(54) **GERÄT ZUR PRÜFUNG DER REIFENPROFILTIEFE UND -ART, DER GESCHWINDIGKEIT UND DER BODENFREIHEIT AN FAHRZEUGEN WÄHREND DER FAHRT**
DEVICE FOR CHECKING THE TYRE PROFILE DEPTH AND PROFILE TYPE, AND THE SPEED AND GROUND CLEARANCE OF VEHICLES IN MOTION
APPAREIL CONCU POUR CONTROLER LA PROFONDEUR ET LE TYPE DE LA SCULPTURE DE PNEU, LA VITESSE ET LA GARDE AU SOL SUR DES VEHICULES EN DEPLACEMENT

(30) Priorität: 22.11.2005 DE 202005018223 U; 23.03.2006 DE 202006004654 U; 18.05.2006 DE 202006008090 U
(43) Veröffentlichungstag der Anmeldung: 06.08.2008
(73) Patentinhaber: Yarayan, Ali, 79379 Müllheim (DE); Schäfer, Frank H., 79809 Weilheim (DE)
(72) Erfinder: SCHÄFER, Frank, H., 79809 Weilheim (DE)
(74) Vertreter: Hiebsch, Gerhard F.
(86) Internationale Anmeldenummer: PCT/EP2006/011186
(87) Internationale Veröffentlichungsnummer: WO 2007/059935

(56) Entgegenhaltungen:
- DE-A1- 1 809 459
- DE-A1- 3 236 520
- DE-A1- 19 514 219
- DE-A1- 19 523 917

## Beschreibung

Die Erfindung betrifft eine Vorrichtung zur Erfassung der Profiltiefe und Art von Fahrzeugreifen nach dem Oberbegriff des Anspruches 1.

### Technisches Gebiet:

### Reifen, 3D-Messtechnik

### Hintergrund:

Zur Steigerung der Verkehrssicherheit und zum Eintreiben von Bußgeldern wurden in den vergangenen Jahrzehnten verschiedene technische Einrichtungen erfunden und in der Praxis eingesetzt. Im Überblick sind dies Geschwindigkeitsmessung, Abstandsmessung, Gewichtskontrolle, Wendekontrolle, Ampelkontrolle, Gurtkontrolle sowie die Kontrolle des Alkoholspiegels im Blut des Fahrers. Auf Grund des hohen Einflusses der Bereifung auf die Fahrphysik eines Kraftfahrzeuges wird die Bereifung im Rahmen von technischen Überprüfungen vermessen und beim Vorliegen einer Ordnungswidrigkeit wird ein Bußgeld ausgestellt. Seit 2006 wird ebenso die Art der Bereifung geprüft, falls diese der Jahreszeit nicht angepasst ist, wird der Fahrer mittels eines Bußgeldes verwarnt.

### Stand der Technik:

Die Reifen von LKWs, Pkws, Motorrädern - einfach allen angetriebenen Fahrzeugen- nutzen sich ab. Unter einer vom Gesetzgeber festgelegten Mindestprofiltiefe muss ein Bußgeld entrichtet werden, weil die Fahrsicherheit mit einem solchen Reifen nicht mehr gewährleistet ist. In Deutschland ist die Bereifungspflicht in § 36 StVZO geregelt. Im Wesentlichen sagt diese Vorschrift folgendes aus:
Das Profil muss über die gesamte Lauffläche mindestens 1,6 mm betragen. Das Hauptprofil (ca. ¾ der Reifenbreite) muss mindestens 1,6mm Profiltiefe haben und es müssen überall Profilrillen vorhanden sein.

Luftreifen müssen am gesamten Umfang und auf der ganzen Breite der Lauffläche mit Profilrillen oder Einschnitten versehen sein.

Als Hauptprofil gelten die breiten Profilrillen im mittleren Bereich der Lauffläche, welcher etwa ¾ der Lauffläche einnimmt.

Als Lauffläche ist der Teil des Reifens zu verstehen, der bei Geradeausfahrt mit der Fahrbahn in Berührung kommt.

In Beispielen ausgedrückt bedeutet dies nach aktueller Rechtsprechung Folgendes:
- Die Mindestprofiltiefe muss auf ¾ der Reifenbreite erreicht werden. Die zweimal übrig bleibenden 1/8 Reifenbreite dürfen auch weniger als 1,6mm Profiltiefe haben, müssen aber noch Profilrillen haben.
- Ein Reifen hat in der Mitte (¾ der Reifenbreite) 2,0mm Profiltiefe und am äußersten Rand nur 1,0mm Profiltiefe. Dieser Reifen ist noch vorschriftsmäßig.
- Ein Reifen hat an einem Rand noch 6mm Profiltiefe, in der Mitte noch 3mm Profiltiefe und an der gegenüberliegenden Seite ist ein 5mm breiter Streifen ohne jegliche Profilrillen. Dieser Reifen ist zu beanstanden.

Die Schwierigkeiten bei der Anwendung dieser Vorschriften liegen nicht in der Handhabung, sondern darin, dass sie von den Fahrzeughaltern und Fahrern nicht eingehalten bzw. regelmäßig überprüft werden.

In der Praxis wird die Einhaltung dieser Vorschrift für die Kraftfahrzeuge z.B. durch die folgenden Maßnahmen überprüft:
- Vorgeschriebene regelmäßige Hauptuntersuchungen
- Fahrzeugkontrollen durch Ordnungsbehörden.

Die Kontrolldichte ist aber so gering, dass -je nach Untersuchung- 3% bis 7% aller Kraftfahrzeuge in der BRD mit nicht korrekten Reifen gefahren werden.

In der Praxis bedeutet dies, dass an einer viel befahren Straße mit z.B. 50.000 Fahrzeugen pro Tag zwischen 1.500 und 3.500 Fahrzeuge fahren, die nicht korrekt bereift sind.

Einen LKW mit z.B. 14 Reifen im Rahmen einer Polizeikontrolle auf die Profiltiefe hin zu prüfen ist aufwendig und dauert bis zu 20 Minuten.

Eine händische Kontrolle aller Fahrzeuge ist sicher.nicht praktikabel.

Im Rahmen der folgenden Offenlegungsschriften ist auf die automatisierte Vermessung von Luftreifen und deren Profilen eingegangen worden:
- DE 29 00 040 C2
- DE 43 16 984 A1
- DE 41 01 921 A1
- DE-OS 22 06 743
- DE-OS 18 09 459
- DE 295 08 978 U1
- DE 94 11 617 U1
- DE 83 04 751 U1
- DE-GM 76 40 078
- DE 691 13 712 T2
- DE 197 44 076 A1
- US 39 18 816
- WO 96 37 754 A1
- WO 96 10 727 A1

Unter anderem ist in den folgenden Veröffentlichungen auf die Kameraerfassung von Fahrzeugen eingegangen worden.
- DE 000069720022 T2
- DE 000069418039 T2

Insbesondere in der DE 197 44 076 A1 wird auf die Verwendung von automatischen Profilmessgeräten zur Bestimmung der Profiltiefen von Luftreifen eingegangen.

In der Druckschrift DE 43 16 984 A1 wird die Vermessung von Reifenprofilen mit Laserlicht und einem optischen Triangulationsverfahren beschrieben.

Eine Vorrichtung gemäß dem Oberbegriff des Anspruches 1 ist in DE-OS 1 809 459 beschrieben.

Des weiteren offenbart DE 691 13 712 T2 eine Einrichtung zur Bestimmung des Abnutzungszustandes von Fahrzeugluftreifen, wenn er einen vorbestimmten Weg passiert.

Mit der bisher beschriebenen Technik lässt sich ein Einsatz einer Profilmesstechnik im fließenden Verkehr nicht realisieren.

Im Detail sind die folgenden Punkte dabei nicht als gelöst zu betrachten:
- Der Praxiseinsatz im fließenden Verkehr.
- Der Schutz der Umgebung, der Arbeitsschutz, die Personengefährdung durch die Messeinrichtung.
- Dass Geschwindigkeiten von 10km/h - 100km/h üblich sind und bei diesen Geschwindigkeiten vermessen werden muss.
- Dass die Profiltiefe nicht in Kurvensituationen oder Lenksituationen vermessen werden kann.
- Die Ausstellung eines Bußgeldes oder die Anzeige einer Warninformation für den jeweiligen Verkehrsteilnehmer.
- Erkennung der Reifenart (Sommer- / Winterreifen) im fließenden Verkehr.

Der Erfindung liegt das Problem zugrunde, ein Messsystem zu schaffen welches die aufgelisteten Punkte löst und damit ein Messsystem zu schaffen welches die Profiltiefe und die Art der Bereifung (Sommer- / Winterreifen) von Luftreifen im fließenden Verkehr erfasst.

Diese Aufgabe wird durch die Erfindung mit einer Vorrichtung der eingangs genannten Art gelöst, bei der erfindungsgemäß die Merkmale des kennzeichnenden Teils des Anspruches 1 vorgesehen sind. Vorteilhafte Weiterbildungen sind den abhängigen Ansprüchen zu entnehmen.

### Lösung des Problems:

### Die Erfindung geht von folgender Überlegung aus:

Zur Vermessung des Profils eines Reifens der an einem Fahrzeug befestigt ist, welches sich mit ca. 50 km/h vorwärts bewegt, gibt es zwei grundsätzliche Möglichkeiten.
1. Von vorne oder von hinten mittels eines optischen Systems den Reifen aufnehmen und aus den so gewonnen Informationen die Profiltiefe ermitteln.
   Auf Grund der ungünstigen Betrachtungswinkel von 0° bis 25° ist die Informationsgewinnung sehr schwierig und bei den hohen Geschwindigkeiten und der Entfernung zwischen Sensor und zu vermessendem Objekt ist eine genaue Vermessung der Profiltiefe nur mit einer sehr hohen Lichtintensität möglich. Dies ist im normalen Straßenverkehr somit nicht sinnvoll.
2. Von unten den in diesem Moment abrollenden Bereich des Reifens aufnehmen. Dieser steht im Moment der Aufnahme relativ still zur Kamera.
   o Durch einen schmalen Schlitz quer zur Bewegungsrichtung der Fahrzeuge wird der abrollende Reifen betrachtet und kann z.B. mit Hilfe des bekannten Lichtschnittverfahrens an vielen Punkten vermessen werden.

Der Praxiseinsatz einer solchen, bereits beschriebenen Einrichtung, ist -- wie von der Erfindung erkannt -- aber kaum möglich. Hierzu sind -- gemäß der Erfindung oder einer ihrer Weiterbildungen -- Erweiterungen und Verbesserungen zweckmäßig, um eine zuverlässige Vermessung des Reifens bei einem bewegten Fahrzeug zu erzielen.

Dementsprechend betrifft die Erfindung eine Vorrichtung zur Erfassung der Profiltiefe von Fahrzeugreifen, wobei die Vorrichtung erfindungsgemäß besteht aus:
- Profilmesseinrichtung
- Kamerasystem zur Erfassung des Fahrzeuges, insbesondere des Nummernschildes
- Auswerteelektronik, die die Profilmesseinrichtung und das Kamerasystem miteinander koppelt.

Eine Weiterbildung sieht vor, dass die Vorrichtung wenigstens ein Mal eine Messgröße des Fahrzeuges berührungslos oder unter Berührung misst, die eine Geschwindigkeit darstellt oder eine Geschwindigkeit insoweit repräsentiert, die durch weitere Einrichtungen den Wert der gemessenen Größe derart umwandelt, dass der Wert der umgewandelten Größe und/oder der umgewandelte Wert eine Geschwindigkeit darstellt, wobei die gemessene oder die aus der Umwandlung ermittelte Geschwindigkeit dem Wert der Fahrtgeschwindigkeit entspricht und die Erfassung der Profiltiefe nur bei Fahrzeugen aktiv wird, die sich in einem vorgegeben Geschwindigkeitsbereich bewegen.

Vorteilhaft ist, dass die Auswerteeinheit ein Messsignal zur Geschwindigkeitserfassung verwendet, welches durch eine Sensorschiene erzeugt wird und die Erfassung der Profiltiefe nur bei Fahrzeugen aktiv wird, die sich in einem vorgegebenen Geschwindigkeitsbereich bewegen.

Vorteilhaft umfasst die Vorrichtung zusätzlich mindestens eine der folgenden Baugruppen:
- Geschwindigkeitsmesseinrichtung zur Erfassung der Fahrzeuggeschwindigkeit
- Fahrtrichtungsmesseinrichtung zur Erfassung der Lenksituation bzw. Bewegungsrichtung des Fahrzeuges

Vorzugsweise ist eine Steuerungseinrichtung zur Steuerung der Messsensoren hinsichtlich ihres Betriebszustandes und oder hinsichtlich ihrer räumlichen Anordnung und/oder hinsichtlich ihres Messbereiches vorhanden.

Vorteilhaft besitzt die Vorrichtung eine Auswertungseinrichtung zur Auswertung der Messwerte, und/oder zum Vergleichen mit gespeicherten Sollwerten und/oder zum Vergleichen der Messwerte.

Insbesondere wird die Erfassung nur auf einer vorher ausgewählten Breite aktiv.

Vorzugsweise wird die Breite des Reifens und/oder die Breite der Zwillingsbereifungen vor der Profiltiefenerkennung gemessen.

Von Vorteil ist, wenn die Auswerteeinheit ein Messsignal zur Bewegungsrichtung des Fahrzeuges erzeugt, das Messsignal die Auswertung der Profilmessung steuert und die Auswertung nur stattfindet, wenn sich das Fahrzeug, in einem vorgegebenen Rahmen, im Geradeauslauf befindet.

Von Vorteil ist auch, wenn die Auswerteeinheit über eine Sensorschiene -- und/oder das Kamerasystem -- ein Messsignal zur Bewegungsrichtung des Fahrzeuges erzeugt, das Messsignal die Auswertung der Profilmessung steuert und die Auswertung nur stattfindet wenn sich das Fahrzeug, in einem vorgegebenen Rahmen, im Geradeauslauf befindet.

Vorteilhaft erzeugt die Auswerteeinheit ein Messsignal zur aktuellen Beschleunigung des Fahrzeuges. Das Messsignal steuert vorzugsweise die Auswertung der Profilmessung. Die Auswertung findet zweckmäßigerweise nur statt, wenn sich das Fahrzeug, in einem vorgegebenen Rahmen, insbesondere in nicht beschleunigter/verzögerter Fahrt befindet.

Des weiteren ist es von Vorteil, wenn die Auswerteeinheit über eine Sensorschiene ein Messsignal zur aktuellen Beschleunigung des Fahrzeuges erzeugt. Das Messsignal steuert zweckmäßigerweise die Auswertung der Profilmessung. Die Auswertung findet insbesondere nur statt, wenn sich das Fahrzeug in einem vorgegebenen Rahmen in nicht beschleunigter / verzögerter Fahrt befindet.

Zweckmäßigerweise ist die Auswertungssoftware in der Lage, Verschmutzungen zu erkennen.

Vorzugsweise verfügt die Auswerteeinheit über mindestens einen Sensor zur Erfassung der Umweltbedingungen (z.B. Temperatur, Regen, Luftfeuchtigkeit, Taupunkt).

Im Anschluss an eine negativ verlaufende Profilvermessung -- und/oder während der noch laufenden Profilvermessung-- wird zweckmäßig eine automatisierte Aufnahme des kontrollierten Fahrzeuges erstellt.

Vorteilhaft erfolgt eine Aufnahme generell bei jedem Fahrzeug, da es vorkommen kann, dass z.B. ein langer LKW in der letzten Achse den schlechten Reifen hat, zu diesem Zeitpunkt dann aber vorne kein Nummernschild mehr erfassbar ist. Aufnahmen von "guten" Fahrzeugen können dann ja verworfen werden.

Vorteilhaft sind die Sensorschienen mehrfach hintereinander angeordnet, um einen größeren Abschnitt des Reifens messen zu können.

Vorteilhaft verwendet man die Geschwindigkeitsmessung zur Verkehrsüberwachung z.B. zur Erstellung eines Bußgeldbescheids.

In einer besonders bevorzugten Weiterbildung sind die Vorrichtung und/oder Messsensoren umfassenden Elemente der Vorrichtung transportabel und/oder mit einem die Vorrichtung und/oder die Elemente aufnehmenden Untergrund über eine feste oder lösbare Verbindung gekoppelt.

Zweckmäßig ist eine Anzeigeeinrichtung zur Anzeige der Messwerte und/oder zur Anzeige von in der Auswertungseinrichtung ermittelten Informationen vorhanden.

Vorteilhaft erzeugt die Vorrichtung ein akustisches Signal, wenn zumindest einer der Messwerte in ungewünschtem Maße von vorherbestimmten Werten abweicht.

Zweckmäßigerweise ist eine Druckeinrichtung zum Drucken der durch die Mess- und oder Auswerteeinrichtung ermittelten Ergebnisse vorhanden.

Vorteilhaft führt eine Leiteinrichtung das Fahrzeug zu der (den) Messstelle (n) .

Vorteilhaft ist mindestens eine Schutzeinrichtung zum Schutz der Sensoren und/oder bestimmten Bereichen der Vorrichtung, wie beispielsweise elektronischen Bauelementen, vorhanden. Diese Vorrichtung kann ebenso dem Schutz gegen eindringende Feuchtigkeit dienen.

Vorzugsweise ist eine Musterdatenbank mit Reifenprofilen vorhanden.

Zweckmäßigerweise erfolgt die Erkennung der Bereifungsart (z.B. Sommer-, Winterreifen).

Vorteilhaft wird ein Bußgeldbescheid ausgestellt, falls die Bereifung nicht der Jahreszeit entspricht - und/oder falls die Profiltiefe nicht den gesetzlichen Vorgaben entspricht.

Insbesondere erfolgt eine Warnung der Information (optisch und/oder akustisch), wenn das Fahrzeug eine Bereifung besitzt, die nicht der Jahreszeit entspricht und/oder wenn das Fahrzeug eine Profiltiefe besitzt, die nicht den gesetzlichen Vorgaben entspricht.

Vorzugsweise werden über eine Kamera die Seite des Fahrzeugs, insbesondere die Reifen aufgenommen.

Die Erfindung führt auch auf eine Vorrichtung zur Vermessung des Höhenprofils eines Fahrzeugunterbodens, die besteht aus:
- Höhenprofilmesseinrichtung
- Kamerasystem zur Erfassung des Fahrzeuges, insbesondere des Nummernschildes
- Auswerteelektronik die die Höhenprofilmesseinrichtung und das Kamerasystem miteinander koppelt.

Vorzugsweise ist dazu eine Steuerungseinrichtung zur Steuerung der Messsensoren hinsichtlich ihres Betriebszustandes und oder hinsichtlich ihrer räumlichen Anordnung und oder hinsichtlich ihres Messbereiches vorhanden.

Insbesondere wird dieses Höhenprofil des Fahrzeugbodens nach einer Minimalhöhe ausgewertet wird.

Zweckmäßigerweise besitzt die Vorrichtung eine Auswertungseinrichtung zur Auswertung der Messwerte und/oder zum Vergleichen mit gespeicherten Sollwerten und/oder zum Vergleichen der Messwerte.,

Vorteilhaft erfolgt eine Warnung oder Information (optisch und oder akustisch), wenn das Fahrzeug eine zu geringe Minimalhöhe besitzt.

Vorzugsweise ist eine Druckeinrichtung zum Drucken der durch die Mess- und oder Auswerteeinrichtung ermittelten Ergebnisse vorhanden.

Vorteilhaft wird ein Bußgeldbescheid oder ein anderes Dokument ausgestellt, falls die Bodenfreiheit nicht den Vorgaben entspricht.

Vorteilhaft führt eine Leiteinrichtung das Fahrzeug zu der (den) Messstelle(n).

Die Erfindung führt auch auf eine Stellfläche, Fahrfläche oder Einbaurahmen zur Aufnahme oder zum Überrollen eines Fahrzeuges, wobei die Stell- oder Fahrfläche zumindest eine Vorrichtung gemäß der Erfindung oder einer Weiterbildung aufweist, wobei die Vorrichtung zumindest teilweise in der Stell- oder Fahrfläche integriert ist oder auf ihr angeordnet ist.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Zum weiteren Verständnis der Erfindung wird nun in Bezug auf die Figuren der Zeichnung eine bevorzugte Ausführungsform der Erfindung am Beispiel eines stationären Prüfsystems zur Prüfung der Reifenprofiltiefe und - art an Fahrzeugen während der Fahrt erläutert. Ein solches Prüfsystem kann in einer anderen, nicht gezeigten Ausführungsform, auch mobil ausgelegt sein.

Die Zeichnung zeigt in:
- Fig. 1:: eine erste Ausführungsform eines stationären Prüfsystems im Straßenverlauf in schematischer Darstellung in einer Aufsicht;
- Fig. 2:: das Prüfsystem der Fig. 1 in einer Seitenschnittansicht;
- Fig. 3:: einen beispielhaften Profilverlauf eines Reifens;
- Fig. 4:: einen beispielhaften Prozessablauf für eine Prüfung der Reifenprofiltiefe und -art an Fahrzeugen;
- Fig. 5:: eine zweite Ausführungsform eines Prüfsystems im Straßenverlauf in schematischer Darstellung in einer Aufsicht;
- Fig. 6:: eine Detaildarstellung zu Fig. 5.

### Sensoreinrichtung zur Messung der Fahrzeuggeschwindigkeit und Bewegungsrichtung

Im Vorfeld der Profilvermessung soll das Fahrzeug sicher erkannt werden, um das Messsystem nur in den Bereichen einzuschalten, die einige Millisekunden später vom Reifen oder dem Unterboden des Fahrzeuges abgedeckt werden. Ansonsten würde eine prinzipielle Gefährdung der Umwelt eintreten. Hier sind im Wesentlichen die im Folgenden aufgezählten Informationen notwenig, die u.a. vom vorgeschlagenen Sensorsystem zuverlässig geliefert werden können.
a. Geschwindigkeit des Fahrzeuges
b. Breite der/des Reifen(s)
c. Position der Reifen über der Messeinrichtung
d. Bewegungsrichtung und Lenksituation des Fahrzeuges.
e. Länge des Fahrzeuges

Mit diesen Informationen oder einer Teilmenge davon ist es möglich, die Vermessung nur bei Kraftfahrzeugen zu starten. Falls ein Fußgänger, Fahrradfahrer oder ein Tier die Sensoreinrichtung passiert kann es so zuverlässig detektiert werden. Die minimale Geschwindigkeit sollte z.B. bei 5m/s und die minimale Breite z.B. bei 75mm liegen. Beim Einsatz in besonderen Umgebungen (z.B. Teststrecke) kann von den Vorschlägen natürlich abgewichen werden.

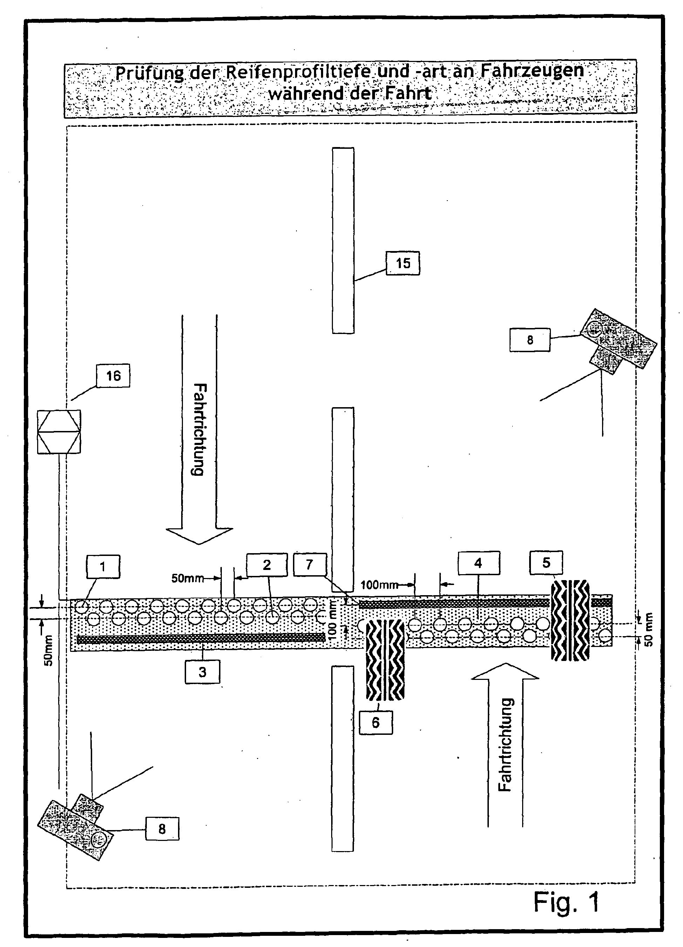

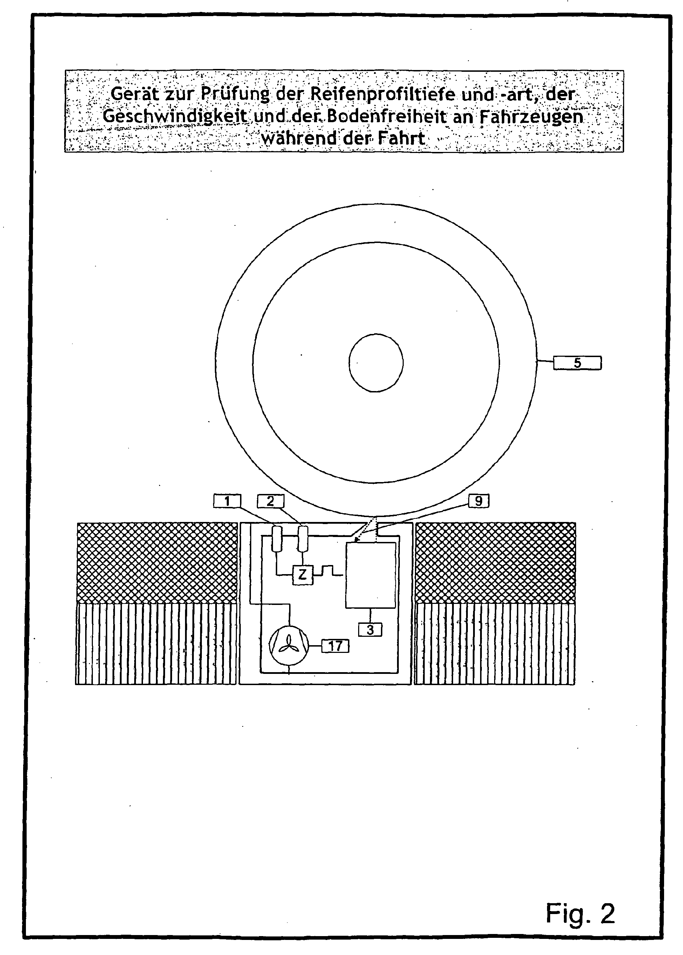

Über eine Anordnung von, in den Fig. 1 und Fig. 2 gezeigten, zwei Reihen Sensoren (1 und 2) z.B. kapazitiven oder induktiven Näherungsschaltern, Lichttastern, mechanischen Schaltern, Ducksensoren, Induktionsschleifen oder ähnlichem werden die Position des Fahrzeugs sowie die Geschwindigkeit des Fahrzeuges erkannt. Optional können natürlich weitere Informationen aus den Sensordaten gewonnen werden. Im Speziellen ist dies die Länge des Fahrzeuges.

Die beiden Sensorreihen (1 und 2) liefern die Information, wann ein Fahrzeug die Messeinrichtung erreicht, welche Geschwindigkeit es hat und ob eine Kurvensituation vorliegt.

In einer abgewandelten Ausführungsform ist zur Kalibrierung der Sensorreihen (1 und 2) und/oder der Profilmesseinrichtung 3, 7 vorzugsweise jeweils eine mit einem definierten Profilmaß versehene Eichvorrichtung angeordnet. Durch Vergleich der tatsächlichen Messgröße mit dem definierten Profilmaß ergibt sich eine Kalibrierkennlinie, mittels der sich die Messungen der Sensorreihen (1 und 2) und/oder der Profilmesseinrichtung 3 im Betrieb korrigieren lässt. Beispielsweise kann ein definiertes Profilmaß an einer Unterseite einer Abdeckklappe über einer Öffnung einem Sensor oder Sensorreihen (1 und 2) und/oder der Profilmesseinrichtung 3 angeordnet sein --.

Folgende wesentlichen Informationen der Sensoreinheit werden aufgezeichnet, ausgewertet und gespeichert, falls es zu einem gültigen Verstoß gegen geltende Regeln bezüglich der Profiltiefe oder der Reifenart kommt:
a. Das Ansprechen jedes Sensors mit einer möglichst genauen Zeitbasis im µs-Bereich. In 10 µs (10*10⁻⁶ Sekunden) fährt ein Fahrzeug bei 100km/h rund 0,25mm.
b. Die Ergebnisse der im Folgenden beschriebenen Berechnungen.

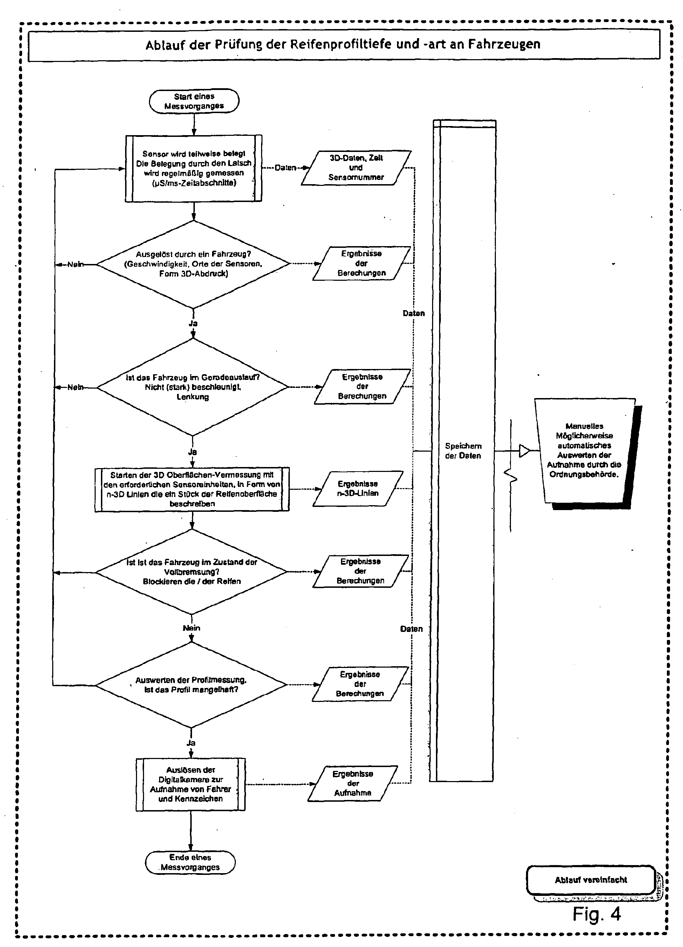

Die Auswertung erfolgt mittels einer schnellen Elektronik, beispielsweise gemäß einem in Fig. 4 gezeigten Ablauf. Nach üblichen Algorithmen werden die folgenden Informationen aus den Ansprechzeiten und absoluten Positionen der Sensoren gewonnen:
1. Geschwindigkeit des Fahrzeuges:
   Hier wird das erste Ansprechen der Reihe 1 (1) und das Ansprechen des oder der nächstliegenden Sensoren aus Reihe 2 (2) herangezogen. Diese Information wird verwendet, um den Laser nur bei Bewegungen im geplanten Geschwindigkeitsbereich einzuschalten. (Für den Straßenverkehr sind z.B. 5m/s bis 30m/s sinnvoll (18km/h bis 108km/h)). Nach der Zeit, die sich aus der Geschwindigkeit *v* und der Entfernung (7) ergibt, kann die Vermessungseinrichtung sicher eingeschaltet werden. Selbstverständlich sind auch andere Informationsquellen denkbar, z.B. Dopplerradar oder Bildauswertungen.
2.Breite des Reifens:
   Aus der Anzahl der nebeneinander ansprechenden Sensoren aus Reihe 1 sowie aus Reihe 2 wird die Rasterbreite des Reifens ermittelt. Die Sensoren sind versetzt angeordnet. Auf diese Weise müssen insgesamt weniger Sensoren eingebaut werden. Natürlich können die Sensoren ebenso in anderen Anordnungen montiert werden.
   Bei einem Abstand der Sensoren in einer Reihe von z.B. 100mm und zwei versetzten Reihen beträgt die Messgenauigkeit ±25mm auf jeder Seite. Falls nun, wie in Skizze 1 (5) gezeigt, 3 Sensoren ansprechen, folgt, dass die Reifenbreite im Raster zwischen 150mm und 200mm liegen muss. Die effektiven Toleranzen der Sensoren müssen hierbei berücksichtigt werden. Diese Toleranzen bedingen einen weiteren Toleranzbereich der bei einigen Zentimetern oder Millimetern, je nach Sensortyp, liegt. Diese Information wird verwendet, um den Laser nur im Bereich des Reifens einzuschalten. Falls sich die Reifenbreite unter einem Grenzbereich z.B. 100mm befindet, wird der Laser zur Vermessung nicht eingeschaltet. In diesem Fall ist z.B. von einem Fahrrad, Fuß oder Tier auszugehen.
3. Anzahl der Reifen:
   Je nach Fahrzeugtyp sind zwischen zwei Reifen und mehr als 10 Reifen zu erwarten. Der Fahrzeugtyp kann mit relativ hoher Sicherheit aus der Reifenanzahl und dem Abstand zwischen den Achsen ermittelt werden. Hier kann weiterhin die Information einer optionalen Induktionsschleife verwendet werden.
4. Lenksituation des Fahrzeuges:
   Wenn sich das Fahrzeug in einer Lenkbewegung befindet, erreicht ein Reifen / Reifenpaar (5) die Sensorschiene (1 und 2) vor dem anderen Reifen / Reifenpaar (6) dieser Achse. Die Zeitpunkte aller Achsen und Reifen können verwertet werden, um ein komplettes Bewegungsprofil des Fahrzeuges zu berechnen.

Durch die vorgeschaltete Sensorschiene können die Informationen des im Anschluss vermessenen Reifenprofils erst sinnvoll ausgewertet werden. Wenn gültige Daten zu erwarten sind, kann die Messeinrichtung zur Tiefenmessung des Reifenprofils aktiviert werden. Natürlich können die Daten einer Achse auch nachträglich verworfen werden, wenn sich das Bewegungsprofil des Fahrzeuges während der Messung ändert.

### Profilvermessung und Verwendung der Daten aus den Punkten 1-4

Die maximale Geschwindigkeit, bei der das Profil des Luftreifens vermessen werden kann, hängt von der Messgeschwindigkeit der verwendeten Sensortechnik ab. Aktuell sind Sensoren mit 16 µs (16*10⁻⁶ Sekunden) Erfassungszeit erhältlich. Die Messgenauigkeit der aktuell verfügbaren Technik liegt bei besser als 0.05mm.

Zur Vermessung des Profils wird ein in die Straßenoberfläche eingelassener Sensor verwendet. Dieser betrachtet über einen Schlitz das überrollende Rad. Mit Hilfe eines Lasers und des Lichtschnittverfahrens oder einer anderen Messtechnik (Radar, Mikrowelle, Ultraschall, etc.) und mit geeigneten Algorithmen wird das Profil des Reifens aufgenommen. Natürlich können über mehrere Messeinrichtungen oder einen in Fahrtrichtung gesteuerten Laser- oder Radarstrahl auch Informationen über größere Flächen oder den gesamten Reifen gewonnen werden.

Beim Praxiseinsatz einer Profilmesseinrichtung kann nicht von immer gleichmäßigen Verkehrsabläufen ausgegangen werden.'

Als bisher nicht gelöst sind daher die folgenden Punkte anzusehen:
a) Dass sich das Profil eines Luftreifens bei einer Bremssituation (Vollbremsung) oder einer erheblichen Beschleunigung verformt. Eine Vermessung ist nicht sicher möglich.
b) Während einer Kurvenfahrt verformt sich das Profil, eine Vermessung ist nicht sicher möglich.
c) Dass Verschmutzungen des Profils zu Fehlmessungen führen können.
d) Gefährdung der Umwelt bzw. von Personen durch die eingesetzte Sensortechnik. (Laser - Auge Problem).
e) Erkennung von Sommer-/Winterreifen.

### Lösung der Punkte a-e:

**a) Positive / negative Beschleunigungssituation (Rutschen)**
   (Siehe oben Pos. 1) Die Sensoreinrichtung (3) unter dem Reifen, der sich bei einer gleichmäßigen Rollbewegung in relativer Ruhe zur Messeinrichtung befindet zeichnet mehrfach den gleichen Querschnitt auf. Der Vergleich, der gemessenen Profile zeigt, ob sich das Rad in relativer Ruhe zur Messeinrichtung befindet, oder ob es eine Rutschsituation gibt. Im Fall einer Rutschsituation werden verschiedene Bilder aufgezeichnet.
   Als zweite Informationsquelle kann die Geschwindigkeit der jeweiligen Achse herangezogen werden. Falls sich die Geschwindigkeit des Fahrzeuges zwischen der Messung der Vorderachse und der letzten Achse erheblich ändert, kann die Messung verworfen werden. In diesem Fall ist von einer Verformung des Reifenprofils auszugehen, sprich einer Fehlmessung. Die Auswertung findet in der Auswerteeinheit (16) statt.

### Kurvenfahrt, Lenkbewegungen

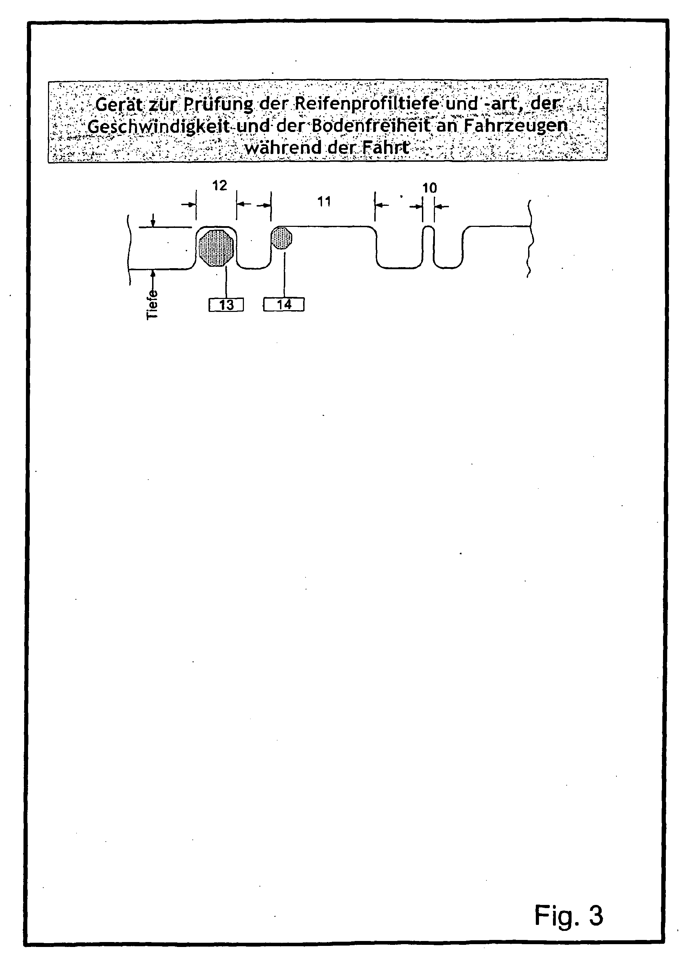

(Siehe oben Pos. 4). Diese Information wird verwendet, um ein Auslösen des Messvorganges zu verhindern oder die gewonnenen Daten nachträglich zu verwerfen. Nur wenn alle Reifen eines Fahrzeuges die Messeinrichtung im Winkel von z.B. 88° bis 92° passieren, darf der Messvorgang ausgelöst bzw. ausgewertet werden. Der Bewegungswinkel des Fahrzeuges kann nach einfachen trigonometrischen und physikalischen Gesetzmäßigkeiten aus den gewonnenen Informationen errechnet werden. Der genaue Bewegungswinkel, der zulässig ist, kann vom Anwender bestimmt werden. Die Auswertung findet in der Auswerteeinheit (16) statt.
b) **Verschmutzung**
   Der Reifen eines Fahrzeuges kann, wie in Fig. 3 gezeigt, im Profil Verschmutzungen aufweisen. Verschmutzungen können gegebenenfalls als mangelhaftes Profil angesehen werden. Dies ist im Sinne einer klaren und zuverlässigen Messung nicht statthaft. Um die Auswirkung von Vermutzungen auszuschließen, kann das Messergebnis ausgewertet werden. Zum einen werden Strukturen, die eine Breite unterhalb einer Minimalbreite aufweisen, nicht berücksichtigt. Die Minimalbreite kann z.B. von der Breite des Reifens abhängig gemacht werden. Sinnvoll ist es z.B. Strukturen mit einer Breite von weniger als 1mm auszublenden. Bei einem LKW - Reifen kann diese Minimalbreite z.B. auf 2mm programmiert werden. Mit dieser Vorgabe können die Minimalstrukturen, die zum Verschmutzen neigen, minimiert werden. Über alle nach obiger Definition relevanten Strukturen wird eine mittlere Tiefe berechnet. Die Abnutzung eines Reifens ist eine Erscheinung, die über relativ große Flächen / Strukturen (>1cm³) praktisch immer gleichmäßig abläuft. Änderungen im Messergebnis, die nicht dieser Gesetzmäßigkeit gehorchen, können verworfen werden (12). Die Struktur ist insgesamt breiter als die Minimalbreite, die Minimaltiefe der Struktur ist im Vergleich zur mittleren Tiefe der gesamten Messung aber so gering, dass dies für eine Auswertung nicht berücksichtigt wird. Sollte ein Fremdkörper im Profil sein (11) erfolgt die Änderung der Tiefe von Minimaltiefe (dies entspricht der umliegenden Lauffläche des Reifens) auf die Maximaltiefe nicht stufig, sondern in Sprüngen. Dies deutet darauf hin, dass eine Verschmutzung vorliegt. Weitere Regeln können hierzu nach Wunsch des Anwenders definiert werden und in der Auswerteeinheit (16) ausgeführt werden.
c) **Personengefährdung**
   Falls ein System zur Vermessung zum Einsatz kommt welches eine Personengefährdung erzeugen könnte, sind folgende Punkte relevant. Als Lasersystem sollte nur ein nicht sichtbarer Laser (z.B. mit infrarotem Licht) zum Einsatz kommen. Dieser wird über die Sensorschiene oder ein vergleichbares System z.B. Induktionsschleife in der Straßenoberfläche, Radarsystem am Straßenrand oder eine Kamera oder Lichtschranke am Straßenrand ausgelöst. Nur in dem Moment, wenn der Strahl durch den Reifen reflektiert wird, kann dieser zum Einsatz kommen. Als zusätzliche Sicherungsmaßnahme wird ein Lasersystem verwendet, welches eine Fokussierung von einigen Millimetern oder Zentimetern aufweist. Diese Art der Fokussierung bedeutet, dass bei eingeschaltetem Laser der Strahl in einigen Zentimetern Entfernung gefahrlos ist.
d) Durch die Aufnahme (n) des Profils (3) kann über eine Musterdatenbank mit allen üblichen Profilen ermittelt werden, um welchen Reifen es sich handelt und somit festgestellt werden, ob dies ein Sommer- oder Winterreifen ist. Falls keine Datenbank zur Verfügung steht oder das Profil nicht definiert ist, kann über eine grundlegende Mustererkennung z.B. mit Hilfe eines neuronalen Netzwerkes oder anderer bekannter Mustererkennungstechniken eine Entscheidung getroffen werden, ob eine der Jahreszeit angemessene Bereifung vorhanden ist. Im Zweifelsfall ist natürlich ebenso eine menschliche Entscheidung auf Basis der gemessenen Daten möglich.

Durch die Berücksichtigung einer oder aller oben genannten Lösungen ist es somit möglich, eine automatisierte Profilmessung im laufenden Verkehr einzusetzen.

### Bodenfreiheit des Fahrzeuges:

Neben der Erfassung der Profiltiefe kann ein Vermessungssystem, welches in der Lage ist das Oberflächenprofil eines (bewegten) Fahrzeuges zu vermessen, ebenso eingesetzt werden, um andere verkehrsrelevante Daten zu erfassen. Im Kern ist dies ein Bodenprofil des Fahrzeuges. Hierzu werden die Sensoren (1) und (2), eine Bilderfassung oder ein anderes System verwendet, um die Breite des Fahrzeuges zu ermitteln. Über die gesamte Breite des Fahrzeuges wird das Höhenprofil des Unterbodens aufgenommen.

Aus diesem Bodenprofil kann zum Beispiel abgeleitet werden, welche (minimale) Bodenfreiheit das Fahrzeug besitzt. Diese Information wird aus dem Oberflächenprofil des Fahrzeuges gewonnen. Störende Informationen wie z.B. statische Ableitungsstreifen oder Spritzschutzblenden werden ausgeblendet.

In der StVZO gibt es keine expliziten Vorschriften über die Bodenfreiheit von Fahrzeugen. Damit sind die allgemeinen Vorgaben des § 30 StVZO in Verbindung mit den allgemein anerkannten Regeln der Technik und den heutigen Standards aus Fahrzeugtechnik und Straßenbau anzuwenden.

Es ergibt sich, dass im verkehrsüblichen Fahrbetrieb beim Überfahren einer Bodenwelle, eines Schlagloches, eines abgesenkten Bordsteines oder beispielsweise einer Prüfgrube, Hebebühne oder anderer Hindernisse keine Beschädigung an Fahrzeugen und Verkehrseinrichtungen (in Parkhäusern, Auffahrten, Baustellen usw.) eintreten darf.

Als Orientierung sehen sachverständige Gremien beim Bundesminister für Verkehr folgende Angaben (VdTÜV- Merkblatt 751):
Tiefer gelegte Fahrzeuge, besetzt mit einem Fahrer, vollen Kraftstofftanks, müssen ein Hindernis von 800 mm Breite und einer Höhe von 110 mm mittig berührungslos überfahren können.

Unter diesen Voraussetzungen wird davon ausgegangen, dass keine Beschädigungen - im üblichen Verkehr - eintreten dürfen. Abweichungen in begründeten Einzelfällen sind u.U. möglich. Dessen ungeachtet haben jedoch in solchen Fällen sowohl Fahrer als auch Fahrzeughalter die Verantwortung für den verkehrssicheren Betrieb des Fahrzeugs. Eine beschädigte Ölwanne beispielsweise kann zu einer unmittelbaren Gefährdung anderer Verkehrsteilnehmer durch austretendes Öl auf der Fahrbahn führen.

In anderen Ländern der EU (z.B. Österreich) ist dies zum Teil strenger geregelt. Hier gibt es bußgeldbehaftete Mindestbodenfreiheiten.

### Erfassung der Fahrzeugdaten

Um einen möglichst automatisierten Ablauf der Prüfungen zu ermöglichen, ist es notwendig, das Kennzeichen des Fahrzeuges sowie ein Foto des Fahrers zum Zeitpunkt der Tat zu erstellen.

Zu diesem Zweck wird ein übliches Kamerasystem (8) montiert, welches ein Foto des betreffenden Fahrzeuges erstellt. Das Foto wird zusammen mit dem Messprofil sowie den sonstigen Sensordaten abgespeichert. Die Auswertung der gewonnenen Daten zur Verkehrsüberwachung bzw. zur Erstellung eines Bußgeldes erfolgt nach den üblichen technischen Regeln.

Natürlich können aus dem Kamerasystem (8) ebenfalls Informationen gewonnen werden, die zur Lösung der Punkte a) und c) eingesetzt werden.

Die Erfassung des Reifentyps kann über ein Kamerasystem, welches sich quer zur Fahrbahn befindet, ebenso ermöglicht oder unterstützt werden. Dieses System kann eine Aufnahme des Reifens von der Seite erstellen. Diese Aufnahme kann die Identifizierung des Reifens erleichtern oder über Schrifterkennung komplett ermöglichen.

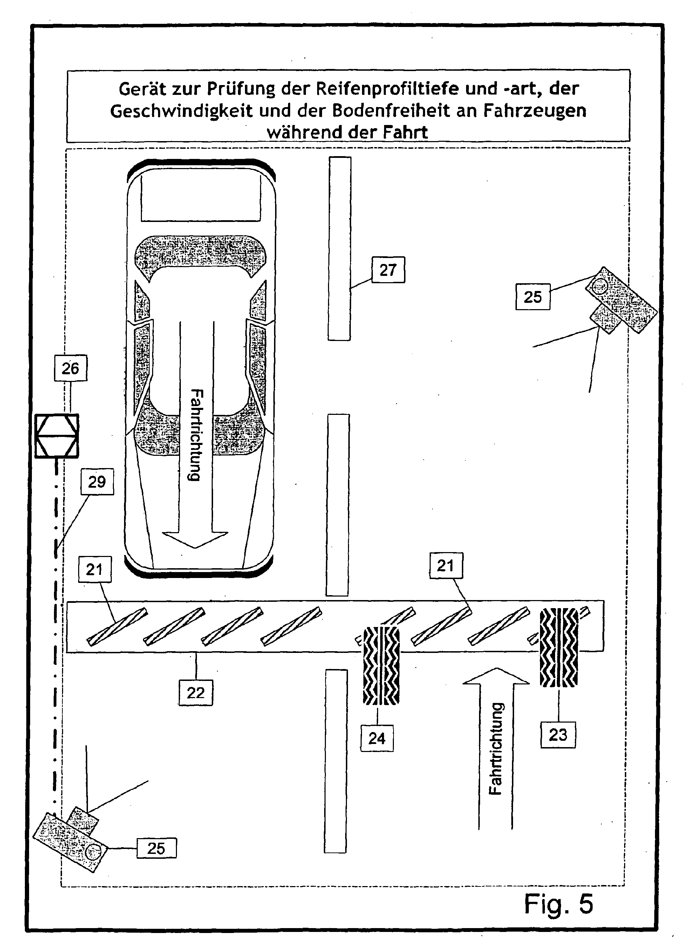

Fig. 5 zeigt eine weitere Ausführungsform einer Profilmesseinrichtung für eine Fahrbahn zur gleichzeitigen Messung der Profiltiefe eines Reifens 23, 24, eines nicht näher bezeichneten in Fig. 5 gezeigten Fahrzeuges bei Bewegung des Fahrzeuges in Fahrtrichtung sowie zur gleichzeitigen Bestimmung der Geschwindigkeit des Fahrzeugs als auch zur Bestimmung einer Fahrtrichtung bzw. Bewegungsrichtung des Fahrzeuges.

Wie bereits im Rahmen der ersten Ausführungsform ist auch bei der zweiten Ausführungsform das erfinderische Konzept verwirklicht worden, welches den Praxiseinsatz der Profilmesseinrichtung im fließenden Verkehr erlaubt.

Vorliegend ist in vorteilhafter Weise die Profilmesseinrichtung 21 aufweisend mindestens eine Sensorreihe zur Profiltiefenmessung schräg zur Fahrtrichtung angeordnet. Dazu ist die Profilmesseinrichtung 21 schräg im als Einbaurahmen dafür ausgebildeten Aufnahmemittel 22 befestigt, so dass das Aufnahmemittel 22 selbst senkrecht zur Fahrtrichtung des Fahrzeugs in der Fahrbahn eingelassen werden kann. Neben der Profilmesseinrichtung 21 und dem Aufnahmemittel 22 weist das Profilmesssystem nach Fig. 5 ein Kamerasystem 25 sowie eine im Wesentlichen mit der Profilmesseinrichtung 21 und dem Kamerasystem 25 verbundenes Auswertesystem 26 auf. Entsprechende Messsignalverläufe sind mit dem Bezugszeichen 29 bezeichnet.

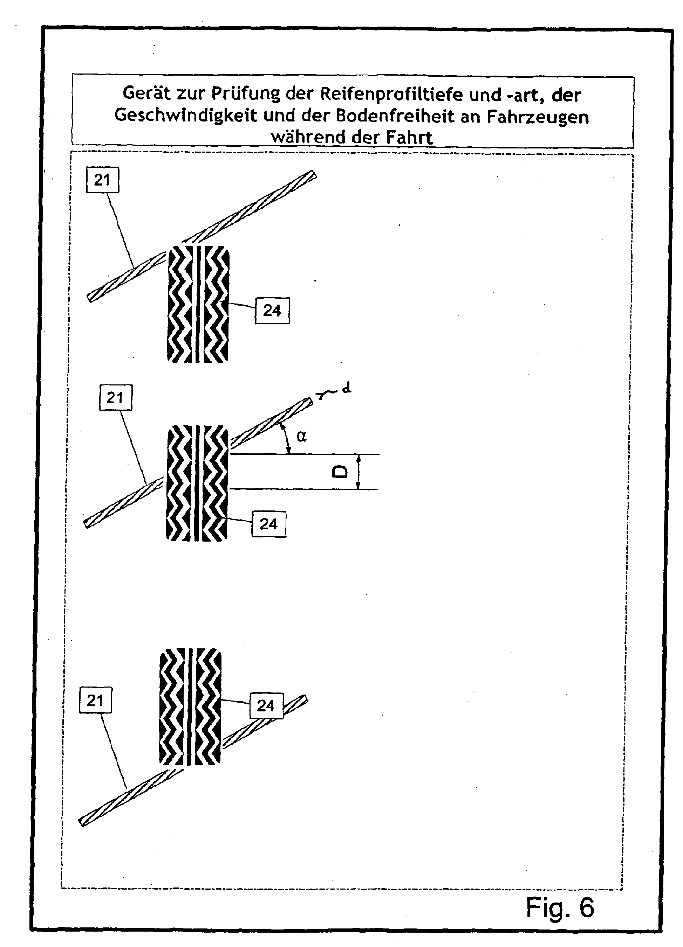

Mit dem in Fig. 5 gezeigten System lässt sich in besonders vorteilhafter Weise neben dem Profil eines Reifens 23, 24 auch die Geschwindigkeit und die Fahrtrichtung bzw. Lenksituation eines Fahrzeuges erfassen. Dazu eignet sich die Schrägstellung der Profilmesseinrichtung 21 in besonderer Weise, da aufgrund der Schrägstellung eine größere effektive Länge zur Geschwindigkeitsmessung bei einem Reifen zur Verfügung steht. Dies ist beispielhaft anhand des Reifens 24 in Fig. 6 dargestellt. Aufgrund des Winkels α der Schrägstellung steht nämlich eine effektive Länge D zur Messung einer Geschwindigkeit, eines Profils und einer Längssituation des Fahrzeuges zur Verfügung im Vergleich zu einer Abmessung d, welche lediglich zur Verfügung stünde, wenn die Profilmesseinrichtung - beispielsweise wie in Fig. 1 die Profilmesseinrichtung 1, im Einbaurahmen 4 senkrecht zur Fahrtrichtung des Fahrzeugs angeordnet wäre.

Die Lenksituation des Fahrzeugs kann vorliegend einfach durch den Vergleich einer relativen Anordnung eines Lenkreifens 23 im Verhältnis zu einem Lenkreifen 24 wie in Fig. 5 dargestellt, erfasst werden.

Darüber hinaus ist bei der in Fig. 5 und Fig. 6 gezeigten Ausführungsform einer Profilmesseinrichtung 21 vorgesehen; das zu bemessende Profil mit hoher Auflösung einzuscannen. Während nämlich Konzepte des Standes der Technik im Wesentlichen auf einer Linien- oder Punktmessung zur Erfassung der Profiltiefe eines Reifens beruhen, sieht das Konzept der vorliegenden Erfindung vor, dass ein Flächenscan über die gesamte zur Verfügung stehende Breite d einer Profilmesseinrichtung - und damit entlang der gesamten Länge D - durchgeführt wird. Es hat sich gezeigt, dass eine flächige Darstellung des Profils beispielsweise mit 30 Linien pro Zentimeter und einer Aufnahmerate von 33 kHz möglich ist, was einer Belichtungszeit im Bereich von einigen Mikrosekunden zur Aufnahme des Profils entspricht. Über die Flächendarstellung erübrigt sich nicht nur eine Anordnung mehrerer Sensorschienen - wie beispielsweise in Fig. 1 - zur Erfassung von Geschwindigkeit und Beschleunigung und der Fahrtsituation des Fahrzeuges. Darüber hinaus ist es möglich, die meisten Fehlerquellen bei einer Profiltiefenmessung auszuschließen, welche beispielsweise dadurch entstehen, dass ein Profil mit Schmutz oder durch Abfahrtindikatoren des Reifenherstellers zugesetzt ist, was bei einer lediglichen Punkt- oder Linienmessung zu einem fehlerhaften Ergebnis führen würde. Bei einer Flächendarstellung lassen sich solche Verschmutzungen kleinerer oder größerer Art und insbesondere die vom Reifenhersteller eingesetzten Abfahrindikatoren zwanglos erkennen, so dass die wahre Profiltiefe dennoch erkannt wird.

Darüber hinaus bietet die Schrägstellung der Profilmesseinrichtung 21 weniger Stoßangriffsfläche beim Überfahren mit einem Reifen und hat somit auch eine geringere Geräuschentwicklung als senkrecht zur Fahrtrichtung ausgerichtete Profiltiefenmesseinrichtungen wie die in Fig. 1.

Zusammenfassend ermöglicht das beispielhaft in der ersten und zweiten Ausführungsform der Erfindung erläuterte Konzept der Erfindung erstmals eine gutachterlich akzeptierbare und rechtlich auswertbare Erfassung einer Profiltiefe des Fahrzeuges im fließenden Verkehr sowie die zugehörigen weiteren Faktoren wie Geschwindigkeit, Beschleunigung und Fahrtsituation, insbesondere Fahrtrichtung, die sich bei der Auswertung des Messergebnisses als notwendig erweisen, um die Relevanz desselben beurteilen zu können.

### Bezugszeichenliste

| **Positionsnummer** | **Beschreibung** |
|---|---|
| 1 | Sensorreihe 1 |
| 2 | Sensorreihe 2 |
| 3 | Profilmesseinrichtung Fahrbahnseite 1 |
| 4 | Einbaurahmen für Sensorsystem |
| 5 | Erster Reifen, der die Sensorschiene erreicht |
| 6 | Zweiter Reifen der die Sensorschiene erreicht |
| 7 | Profilmesseinrichtung Fahrbahnseite 2 |
| 8 | Kamera zur Erfassung des vorderen Nummerschildes und des Fahrers |
| 9 | Messsignal zur Vermessung der Profiltiefe |
| 10 | Schmale Profilrille die über das Auswer-tesystem unterdrückt werden kann |
| 11 | Profilrille geeignet zur Vermessung |
| 12 | Profilrille geeignet zur Vermessung |
| 13 | Große Verschmutzung |
| 14 | Kleine Verschmutzung |
| 15 | Mittelstreifen |
| 16 | Auswerteeinheit verbunden im wesentlichen mit (8,1,2,3) |
| 17 | |
| 18 | |
| 19 | |
| 20 | |
| 21 | Sensorreihe mit Einrichtung zur Profil-tiefenmessung |
| 22 | Einbaurahmen für Sensorsystem |
| 23 | Erster Reifen, der die Sensorschiene erreicht |
| 24 | Zweiter Reifen, der die Sensorschiene erreicht |
| 25 | Kamera zur Erfassung des vorderen Nummernschildes und des Fahrers |
| 26 | Auswerteeinheit verbunden im Wesentlichen mit (1 und 5) |
| 27 | Mittelstreifen |
| 28 | |
| 29 | Messsignal zur Vermessung der Profiltiefe |
| 30 | Schmale Profilrille, die über das Auswertesystem unterdrückt werden kann |
| 31 | Profilrille geeignet zur Vermessung |
| 32 | Profilrille geeignet zur Vermessung |
| 33 | Große Verschmutzung |
| 34 | Kleine Verschmutzung |

## Patentansprüche

1. Vorrichtung zur Erfassung einer Profiltiefe und/oder einer Profilart eines Profils eines Fahrzeugreifens an einem zur Vorrichtung bewegten Fahrzeug aus mehreren Fahrzeugen während der Fahrt, insbesondere im fließenden Verkehr, aufweisend:
- eine Profilmesseinrichtung (3, 7),
- ein Kamerasystem (8) zur Erfassung des Fahrzeuges,
- eine Auswerteeinheit (16), welche die Profilmesseinrichtung (3, 7) und das Kamerasystem (8) miteinander koppelt; und **gekennzeichnet durch** die Baugruppen:
- eine Geschwindigkeitsmesseinrichtung zur Erfassung der Fahrzeuggeschwindigkeit,
- eine Fahrtrichtungsmesseinrichtung (3, 7) zur Erfassung der Lenksituation bzw. Bewegungsrichtung des Fahrzeuges, wobei
- die Auswerteeinheit (16) ausgelegt ist, ein Messsignal (9) zur aktuellen Beschleunigung des Fahrzeuges zu erzeugen und die Steuerung ausgelegt ist, eine Auswertung (16) für das eine von mehreren Fahrzeugen nur zuzulassen, wenn sich das Fahrzeug in einem vorgegebenen Rahmen bei einer verhältnismäßig gleichmäßigen Geschwindigkeit befindet; und wobei
- mittels der Auswerteeinheit (16) ein Messsignal (9) zur Bewegungsrichtung des Fahrzeuges erzeugbar ist und das Messsignal (9) für eine Steuerung der Auswertung der Profilmessung (3, 7) vorgesehen ist und die Steuerung ausgelegt ist, eine Auswertung für das eine von mehreren Fahrzeugen nur dann zuzulassen, wenn sich das Fahrzeug in einem vorgegebenen Rahmen in Geradeauslauf befindet.

2. Vorrichtung nach Anspruch 1, **dadurch gekennzeichnet, dass** das Kamerasystem zur Erfassung des Nummernschildes des Fahrzeuges ausgelegt ist.

3. Vorrichtung nach Anspruch 1 oder 2, **dadurch gekennzeichnet, dass** die Vorrichtung zur berührungslosen Geschwindigkeitsmessung des Fahrzeuges ausgelegt ist.

4. Vorrichtung nach Anspruch 1 oder 2, **dadurch gekennzeichnet, dass** die Vorrichtung zur Geschwindigkeitsmessung des Fahrzeuges unter Berührung ausgelegt ist.

5. Vorrichtung nach einem der Ansprüche 1 bis 4, **gekennzeichnet durch** eine Auswerteeinheit (16) zur Aufnahme eines **durch** eine Sensorschiene (1, 2) erzeugten Messsignals (9) zur Geschwindigkeitserfassung.

6. Vorrichtung nach einem der Ansprüche 3 bis 5, **dadurch gekennzeichnet, dass** die Vorrichtung ausgelegt ist, eine Erfassung der Profiltiefe nur bei Fahrzeugen zu aktivieren, die sich in einem vorgegebenen Geschwindigkeitsbereich bewegen.

7. Vorrichtung nach einem der Ansprüche 1 bis 6, aufweisend eine Steuereinrichtung zur Steuerung der Messsensoren hinsichtlich ihres Betriebszustandes und/oder hinsichtlich ihrer räumlichen Anordnung und/oder ihres Messbereiches.

8. Vorrichtung nach einem der Ansprüche 1 bis 7, zusätzlich aufweisend eine Auswertungseinrichtung (16) zur Auswertung der Messwerte und/oder zum Vergleichen von gespeicherten Sollwerten und/oder zum Vergleichen der Messwerte.

9. Vorrichtung nach einem der Ansprüche 1 bis 8, **dadurch gekennzeichnet, dass** eine Erfassung nur auf einer vorher ausgewählten Breite eines Fahrzeugreifens aktivierbar ist.

10. Vorrichtung nach einem der Ansprüche 1 bis 9, welche ausgelegt ist, die Breite des Fahrzeugreifens und/oder die Breite einer Fahrzeugzwillingsbereifung vor einer Profiltiefenerkennung messbar zu machen.

11. Vorrichtung nach einem der Ansprüche 1 bis 10, **dadurch gekennzeichnet, dass** die Steuerung ausgelegt ist, eine Auswertung (16) nur zuzulassen, wenn sich das Fahrzeug in einem vorgegebenen Rahmen in einer nicht beschleunigten, insbesondere nicht verzögerten Fahrt befindet.

12. Vorrichtung nach einem der Ansprüche 1 bis 11, **dadurch gekennzeichnet, dass** das Messsignal (9) über eine Sensorschiene erzeügbar ist.

13. Vorrichtung nach einem der Ansprüche 1 bis 12, **dadurch gekennzeichnet, dass** ein Modul aufweisend eine Auswertungssoftware vorgesehen ist, insbesondere eine Auswertungssoftware mittels derer Verschmutzungen (13, 14) erkennbar sind.

14. Vorrichtung nach einem der Ansprüche 1 bis 13, **dadurch gekennzeichnet, dass** die Auswerteeinheit (16) ausgelegt ist über mindestens einen Sensor (12) Umweltbedingungen erfassbar zu machen, insbesondere Umweltbedingungen ausgewählt aus der Gruppe bestehend aus: Temperatur, Regen, Luftfeuchtigkeit, Tau.

15. Vorrichtung nach einem der Ansprüche 1 bis 14, **dadurch gekennzeichnet, dass** im Anschluss an eine negativ verlaufende Profilvermessung eine automatisierte Aufnahme des kontrollierten Fahrzeuges erstellbar ist.

16. Vorrichtung nach einem der Ansprüche 1 bis 15, **dadurch gekennzeichnet, dass** vor einer negativ verlauf enden Profilmessung eine automatische Aufnahme des kontrollierten Fahrzeuges erstellbar list.

17. Vorrichtung nach einem der Ansprüche 1 bis 16, **dadurch gekennzeichnet, dass** eine Anzahl von Sensorschienen hintereinander angeordnet sind.

18. Vorrichtung nach einem der Ansprüche 1 bis 17, **dadurch gekennzeichnet, dass** eine Geschwindigkeitsmessung zur Verkehrsüberwachung, insbesondere zur Erstellung eines Bußgeldbescheides vorgesehen ist.

19. Vorrichtung nach einem der Ansprüche 1 bis 18, in Form einer transportablen Vorrichtung, insbesondere aufweisend eine lösbare Verbindung zur Ankopplung an einen die Vorrichtung aufnehmenden Untergrund.

20. Vorrichtung nach einem der Ansprüche 1 bis 19, **gekennzeichnet durch** eine Anzeigeeinrichtung zur Anzeige der Messwerte und/oder zur Anzeige von in der Auswertungseinrichtung (16) ermittelten Informationen:

21. Vorrichtung nach einem der Ansprüche 1 bis 20, **dadurch gekennzeichnet, dass** ein akustisches Signal erzeugbar ist, wenn zumindest einer der Messwerte in ungewünschtem Maße von vorher bestimmten Werten abweicht.

22. Vorrichtung nach einem der Ansprüche 1 bis 21, aufweisend eine Druckeinrichtung zum Drucken der durch die Mess- und/oder Auswerteeinrichtung (16) ermittelten Ergebnisse.

23. Vorrichtung nach einem der Ansprüche 1 bis 22, aufweisend eine Leiteinrichtung zur Führung des Fahrzeuges zu der (den) Messstelle (n).

24. Vorrichtung nach einem der Ansprüche 1 bis 23, aufweisend mindestens eine Schutzeinrichtung zum Schutz der Sensoren (1, 2) und/oder elektronischen Bauelementen.

25. Vorrichtung nach einem der Ansprüche 1 bis 24, **dadurch gekennzeichnet, dass** die Vorrichtung, insbesondere die Schutzeinrichtung, ein definiertes Eichmass zur Kalibrierung der Sensoren (1, 2) und/oder der Profilmesseinrichtung (3, 7) aufweist.

26. Vorrichtung nach einem der Ansprüche 1 bis 25, aufweisend eine Musterdatenbank mit Reifenprofilen.

27. Vorrichtung nach einem der Ansprüche 1 bis 26, welche zur Erkennung der Bereifungsart, insbesondere zur Erkennung von Sommer- und/oder Winterreifen, ausgelegt ist.

28. Vorrichtung nach einem der Ansprüche 1 bis 27, die ausgelegt ist; einen Bußgeldbescheid auszustellen, falls die Bereifung nicht der Jahreszeit und/oder der Witterung entspricht.

29. Vorrichtung nach einem der Ansprüche 1 bis 28, aufweisend Mittel zur Warnung und/oder Information, insbesondere optische und/oder akustische Mittel, insbesondere Mittel, die zur Aktivierung ausgelegt sind, wenn das Fahrzeug eine Bereifung aufweist, die nicht der Jahreszeit/Witterung entspricht.

30. Vorrichtung nach einem der Ansprüche 1 bis 29, aufweisend eine Kamera (8), insbesondere zur Aufnahme einer Seite des Fahrzeuges, insbesondere zur Aufnahme eines Reifens.

31. Vorrichtung nach einem der Ansprüche 1 bis 30, **dadurch gekennzeichnet, dass** die Profilmesseinrichtung in Form einer Höhenprofil- und/oder Profilartmesseinrichtung gebildet ist.

32. Vorrichtung nach einem der Ansprüche 1 bis 31, aufweisend eine Steuerungseinrichtung zur Steuerung der Messsensoren hinsichtlich ihres Betriebszustandes und/oder hinsichtlich ihrer räumlichen Anordnung und/oder hinsichtlich ihres Messbereiches.

33. Vorrichtung nach einem der Ansprüche 1 bis 32, mittels der ein Höhenprofil des Fahrzeugbodens nach einer Minimalhöhe auswertbar ist.

34. Vorrichtung nach einem der Ansprüche 1 bis 33, aufweisend eine Auswertungseinrichtung (16), die zur Auswertung der Messwerte und/oder zum Vergleichen mit gespeicherten Sollwerten und/oder zum Vergleichen der Messwerte ausgelegt ist.

35. System aufweisend ein Aufnahmemittel, insbesondere eine Stellfläche, eine Fahrfläche oder einen Einbaurahmen, zur Aufnahme und/oder zum Überrollen durch ein Fahrzeug, **dadurch gekennzeichnet, dass** mindestens die Profilmesseinrichtung (3, 7) der Vorrichtung nach einem der Ansprüche 1 bis 34 im Aufnahmemittel integriert ist oder auf diesem angeordnet ist.

36. System nach Anspruch 35, **dadurch gekennzeichnet, dass** das Aufnahmemittel, insbesondere die Profilmesseinrichtung (3, 7), senkrecht zu einer Fahrzeugfahrtrichtung angeordnet ist.

37. System nach Anspruch 35, **dadurch gekennzeichnet, dass** das Aufnahmemittel, insbesondere die Profilmeßeinrichtung (3, 7), schräg zu einer Fahrzeugfahrtrichtung angeordnet ist.

## Claims

1. Device for detecting a profile depth and/or a profile type of a profile of a vehicle tyre during travel on one vehicle moving relative to the device out of a plurality of vehicles, in particular in flowing traffic, comprising:
- a profile measurement means (3, 7),
- a camera system (8) for recording the vehicle, and
- an evaluation unit (16), which couples the profile measurement means (3, 7) and the camera system (8) to one another; and **characterised by** the following assemblies:
- a speed measurement means for detecting vehicle speed,
- a direction of travel measurement means (3, 7) for detecting the steering state or direction of motion of the vehicle,
- the evaluation unit (16) being configured to produce a measurement signal (9) for measuring the current acceleration of the vehicle, and the control system being configured to allow the evaluation (16) of the one of the plurality of vehicles only if the vehicle is situated in a predetermined frame at a relatively uniform speed; and
- a measurement signal (9) for detecting the direction of motion of the vehicle being produced by the evaluation unit (16), the measurement signal (9) being provided for controlling the evaluation of the profile measurement (3, 7), and the control system being configured to allow the evaluation of the one of the plurality of vehicles only if the vehicle is situated in a predetermined frame and is travelling in a straight line.

2. Device according to claim 1, **characterised in that** the camera system is configured to detect the number plate of the vehicle.

3. Device according to either claim 1 or claim 2, **characterised in that** the device is configured for contact-free speed measurement of the vehicle.

4. Device according to either claim 1 or claim 2, **characterised in that** the device is configured for speed measurement of the vehicle with contact.

5. Device according to any one of claims 1 to 4, **characterised by** an evaluation unit (16) for recording a measurement signal (9) produced by a sensor rail (1, 2) for speed detection.

6. Device according to any one of claims 3 to 5, **characterised in that** the device is configured to activate detection of the profile depth only for vehicles which are moving within a predetermined speed range.

7. Device according to any one of claims 1 to 6, comprising a control means for controlling the measurement sensors with regard to the operating status thereof and/or with regard to the spatial arrangement thereof and/or the measurement range thereof.

8. Device according to any one of claims 1 to 7, further comprising an evaluation means (16) for evaluating the measured values and/or for comparison of stored theoretical values and/or for comparison of the measured values.

9. Device according to any one of claims 1 to 8, **characterised in that** detection can be activated only for a previously selected width of vehicle tyre.

10. Device according to any one of claims 1 to 9, said device being configured to make the width of the vehicle tyre and/or the width of a twin set of vehicle tyres measurable before the detection of the profile depth.

11. Device according to any one of claims 1 to 10, **characterised in that** the control system is configured to allow evaluation (16) only if the vehicle is situated in a predetermined frame and is travelling in a non-accelerating and in particular non-decelerating manner.

12. Device according to any one of claims 1 to 11, **characterised in that** the measurement signal (9) is produced by means of a sensor rail.

13. Device according to any one of claims 1 to 12, **characterised in that** a module comprising evaluation software is provided, in particular evaluation software which can identify dirt (13, 14).

14. Device according to any one of claims 1 to 13, **characterised in that** the evaluation unit (16) is configured to make environmental conditions detectable by means of at least one sensor (12), in particular environmental conditions selected from the group consisting of: temperature, rain, atmospheric humidity and dew.

15. Device according to any one of claims 1 to 14, **characterised in that** an automated recording of the monitored vehicle can be produced following a negative profile measurement.

16. Device according to any one of claims 1 to 15, **characterised in that** an automated recording of the monitored vehicle can be produced before a negative profile measurement.

17. Device according to any one of claims 1 to 16, **characterised in that** a number of sensor rails are arranged behind one another.

18. Device according to any one of claims 1 to 17, **characterised in that** speed measurement is provided for traffic monitoring, in particular for producing a notice of a fine.

19. Device according to any one of claims 1 to 18 in the form of a transportable device, in particular comprising a releasable connection for coupling to a base which receives the device.

20. Device according to any one of claims 1 to 19, **characterised by** a display device for displaying the measured values and/or for displaying information determined by the evaluation device (16).

21. Device according to any one of claims 1 to 20, **characterised in that** an acoustic signal can be produced when at least one of the measured value deviates to an undesirable extent from previously determined values.

22. Device according to any one of claims 1 to 21, comprising a printing device for printing the results determined by the measurement and/or the evaluation device (16).

23. Device according to any one of claims 1 to 22, comprising a guide means for directing the vehicle to the measurement point(s).

24. Device according to any one of claims 1 to 23, comprising at least one protection device for protecting the sensors (1, 2) and/or electronic components.

25. Device according to any one of claims 1 to 24, **characterised in that** the device, in particular the protection means, has a defined standard for calibrating the sensors (1, 2) and/or the profile measurement means (3, 7).

26. Device according to any one of claims 1 to 25, comprising a sample database with tyre profiles.

27. Device according to any one of claims 1 to 26, said device being configured to identify the type of tyres, in particular to identify summer tyres and/or winter tyres.

28. Device according to any one of claims 1 to 27, configured to issue a notice of a fine if the set of tyres does not correspond to the season and/or to the weather.

29. Device according to any one of claims 1 to 28, comprising warning and/or information means, in particular optical and/or acoustic means, in particular means which are configured to be activated if the vehicle has a set of tyres which does not correspond to the season/weather.

30. Device according to any one of claims 1 to 29, comprising a camera (8), in particular for recording one side of the vehicle, in particular for recording a tyre.

31. Device according to any one of claims 1 to 30, **characterised in that** the profile measurement means is constructed in the form of a height profile and/or profile-type measurement means.

32. Device according to any one of claims 1 to 31, comprising a control means for controlling the measurement sensors with regard to the operating status thereof and/or with regard to the spatial arrangement thereof and/or with regard to the measurement range thereof.

33. Device according to any one of claims 1 to 32, by means of which a height profile of the vehicle floor can be evaluated in accordance with a minimum height.

34. Device according to any one of claims 1 to 33, comprising an evaluation device (16) which is configured for evaluating the measured values and/or for comparison with stored theoretical values and/or for comparison of the measured values.

35. System comprising a recording means, in particular a ground surface, a driving surface or a mounting frame, for recording and/or being driven over by a vehicle, **characterised in that** at least one profile measurement means (3, 7) of the device according to any one of claims 1 to 34 is integrated in the recording means or arranged on the recording means.

36. System according to claim 35, **characterised in that** the recording means, in particular the profile measurement means (3, 7), is arranged perpendicular to a direction of travel of the vehicle.

37. System according to claim 35, **characterised in that** the recording means, in particular the profile measurement means (3, 7), is arranged obliquely to a direction of travel of the vehicle.

## Revendications

1. Dispositif destiné à détecter une profondeur de sculpture et/ou un type de sculpture d'une sculpture d'un pneu de véhicule sur un véhicule mobile par rapport au dispositif parmi plusieurs véhicules en déplacement, en particulier lorsque le trafic est fluide, comprenant :
- un appareil de mesure de sculpture (3, 7),
- un système de caméra (8) destiné à détecter le véhicule,
- une unité d'analyse (16), laquelle couple l'appareil de mesure de sculpture (3, 7) et le système de caméra l'un à l'autre ; et **caractérisé par** les modules suivants :
- un appareil de mesure de vitesse destiné à détecter la vitesse du véhicule,
- un appareil de mesure du sens de marche (3, 7) destiné à détecter la situation de direction et/ou le sens de déplacement du véhicule,
- l'unité d'analyse (16) étant conçue pour produire un signal de mesure (9) par rapport à l'accélération actuelle du véhicule et la commande étant conçue pour n'autoriser une analyse (16) de l'un des différents véhicules que lorsque le véhicule se situe dans un cadre prédéfini tout en ayant une vitesse relativement régulière ; et
- un signal de mesure (9) pouvant être produit par rapport au sens de déplacement du véhicule au moyen de l'unité d'analyse (16) et le signal de mesure (9) étant prévu pour une commande de l'analyse de la mesure de sculpture (3, 7) et la commande étant conçue pour n'autoriser une analyse de l'un des divers véhicules que lorsque le véhicule se situe dans un cadre prédéfini en trajectoire rectiligne.

2. Dispositif selon la revendication 1, **caractérisé en ce que** le système de caméra est conçu pour détecter la plaque d'immatriculation du véhicule.

3. Dispositif selon la revendication 1 ou 2, **caractérisé en ce que** le dispositif est conçu pour mesurer la vitesse du véhicule sans contact.

4. Dispositif selon la revendication 1 où 2, **caractérisé en ce que** le dispositif est conçu pour mesurer la vitesse du véhicule avec contact.

5. Dispositif selon l'une quelconque des revendications 1 à 4, **caractérisé par** une unité d'analyse (16) destinée à enregistrer un signal de mesure (9) produit par un rail de capteur (1, 2) pour détecter la vitesse.

6. Dispositif selon l'une quelconque des revendications 3 à 5, **caractérisé en ce que** le dispositif est conçu pour n'activer une détection du profil de sculpture que pour les véhicules qui se déplacent dans une plage de vitesse prédéfinie.

7. Dispositif selon l'une quelconque des revendications 1 à 6, comprenant un appareil de commande destiné à commander l'état de fonctionnement et/ou la disposition dans l'espace et/ou la plage de mesure des capteurs de mesure.

8. Dispositif selon l'une quelconque des revendications 1 à 7, comprenant en outre un appareil d'analyse (16) destiné à analyser les valeurs mesurées et/ou à comparer les valeurs théoriques enregistrées et/ou à comparer les valeurs mesurées.

9. Dispositif selon l'une quelconque des revendications 1 à 8, **caractérisé en ce qu'**une détection ne peut être activée que sur une largeur précédemment sélectionnée d'un pneu de véhicule.

10. Dispositif selon l'une quelconque des revendications 1 à 9, lequel est conçu pour que la largeur du pneu du véhicule et/ou la largeur d'un pneumatique jumeau puisse être mesurée avant de détecter la profondeur de la sculpture.

11. Dispositif selon l'une quelconque des revendications 1 à 10, **caractérisé en ce que** la commande est conçue pour n'autoriser une analyse (16) que lorsque le véhicule se situe dans un cadre prédéfini et qu'il n'accélère pas, en particulier qu'il ne décélère pas.

12. Dispositif selon l'une quelconque des revendications 1 à 11, **caractérisé en ce que** le signal de mesure (9) peut être produit par un rail de capteur.

13. Dispositif selon l'une quelconque des revendications 1 à 12, **caractérisé en ce qu'**un module comprenant un logiciel d'analyse est prévu, en particulier un logiciel d'analyse au moyen duquel il est possible de détecter des encrassements (13, 14).

14. Dispositif selon l'une quelconque des revendications 1 à 13, **caractérisé en ce que** l'unité d'analyse (16) est conçue pour que les conditions ambiantes puissent être détectées par au moins un capteur (12), les conditions ambiantes étant en particulier sélectionnées parmi le groupe constitué de : la température, la pluie, l'humidité de l'air, la rosée.

15. Dispositif selon l'une quelconque des revendications 1 à 14, **caractérisé en ce qu'**un enregistrement automatique du véhicule contrôlé peut être établi après une mesure de la sculpture qui s'est déroulée négativement.

16. Dispositif selon l'une quelconque des revendications 1 à 15, **caractérisé en ce qu'**un enregistrement automatique du véhicule contrôlé peut être établi avant une mesure de sculpture se déroulant négativement.

17. Dispositif selon l'une quelconque des revendications 1 à 16, **caractérisé en ce qu'**un certain nombre de rails de capteur sont disposés les uns derrière les autres.

18. Dispositif selon l'une quelconque des revendications 1 à 17, **caractérisé en ce qu'**une mesure de la vitesse est prévue pour surveiller la circulation, en particulier pour établir une contravention.

19. Dispositif selon l'une quelconque des revendications 1 à 18, sous forme d'un dispositif transportable, comprenant en particulier une connexion amovible pour le coupler à un fond logeant le dispositif.

20. Dispositif selon l'une quelconque des revendications 1 à 19, **caractérisé par** un appareil d'affichage destiné à afficher les valeurs mesurées et/ou à afficher les informations déterminées par l'appareil d'analyse (16).

21. Dispositif selon l'une quelconque des revendications 1 à 20, **caractérisé en ce qu'**un signal acoustique peut être produit lorsqu'au moins une des valeurs mesurées s'écarte de façon non souhaitable des valeurs précédemment définies.

22. Dispositif selon l'une quelconque des revendications 1 à 21, comprenant un appareil d'impression destiné à imprimer les résultats déterminés par l'appareil de mesure et/ou d'analyse (16).

23. Dispositif selon l'une quelconque des revendications 1 à 22, comprenant un appareil de guidage destiné à guider le véhicule en direction du(des) point(s) de mesure.

24. Dispositif selon l'une quelconque des revendications 1 à 23, comprenant au moins un appareil de protection destiné à protéger les capteurs (1, 2) et/ou les composants électroniques.

25. Dispositif selon l'une quelconque des revendications 1 à 24, **caractérisé en ce que** le dispositif, en particulier l'appareil de protection, comprend une jauge définie destinée à calibrer les capteurs (1, 2) et/ou l'appareil de mesure de sculpture (3, 7).

26. Dispositif selon l'une quelconque des revendications 1 à 25, comprenant une banque de données de modèles de sculptures de pneu.

27. Dispositif selon l'une quelconque des revendications 1 à 26, lequel est conçu pour détecter le type de pneumatique, en particulier pour détecter les pneus été et/ou hiver.

28. Dispositif selon l'une quelconque des revendications 1 à 27, qui est conçu pour délivrer une amende au cas où le pneumatique n'est pas adapté à la saison et/ou aux conditions météorologiques.

29. Dispositif selon l'une quelconque des revendications 1 à 28, comprenant des moyens d'avertissement et/ou d'information, en particulier des moyens optiques et/ou acoustiques, en particulier des moyens qui sont conçus pour être activés lorsque le véhicule comprend un pneumatique qui n'est pas adapté à la saison/aux conditions météorologiques.

30. Dispositif selon l'une quelconque des revendications 1 à 29, comprenant une caméra (8), destinée en particulier à prendre un côté du véhicule en photo, destiné en particulier à prendre un pneu en photo.

31. Dispositif selon l'une quelconque des revendications 1 à 30, **caractérisé en ce que** l'appareil de mesure de sculpture présente la forme d'un appareil de mesure de profil de hauteur et/ou de type de sculpture.

32. Dispositif selon l'une quelconque des revendications 1 à 31, comprenant un appareil de commande destiné à commander l'état de fonctionnement et/ou la disposition dans l'espace et/ou la plage de mesure des capteurs de mesure.

33. Dispositif selon l'une quelconque des revendications 1 à 32, au moyen duquel un profil de hauteur du fond du véhicule peut être évalué selon une hauteur minimale.

34. Dispositif selon l'une quelconque des revendications 1 à 33, comprenant un appareil d'analyse (16), qui est conçu pour l'analyse des valeurs mesurées et/ou la comparaison aux valeurs théoriques enregistrées et/ou la comparaison des valeurs mesurées.

35. Système comprenant des moyens de réception, en particulier une surface au sol, une surface de conduite ou une rainure, sur lesquels un véhicule peut être réceptionné et/ou rouler, **caractérisé en ce qu'**au moins l'appareil de mesure de sculpture (3, 7) du dispositif selon l'une quelconque des revendications 1 à 34 est intégré dans les moyens de réception ou disposé dessus.

36. Système selon la revendication 35, **caractérisé en ce que** les moyens de réception, en particulier l'appareil de mesure de sculpture (3, 7), sont disposés perpendiculairement à un sens de marche du véhicule.

37. Système selon la revendication 35, **caractérisé en ce que** les moyens de réception, en particulier l'appareil de mesure de sculpture (3, 7), sont disposés de manière oblique par rapport à un sens de marche du véhicule.
